# EUROPÄISCHE PATENTSCHRIFT

(11) **EP 1 407 223 B1**
(45) Veröffentlichungstag und Bekanntmachung des Hinweises auf die Patenterteilung: **14.11.2007**
(21) Anmeldenummer: 02758316.0
(22) Anmeldetag: 05.07.2002
(51) Int. Cl.: G01B 11/12, G01B 21/14, G01B 11/26

(54) **VERFAHREN ZUR MESSUNG DER RÄUMLICHEN LAGE UND/ODER DER ABMESSUNG EINER DURCHBRECHUNG EINES WERKSTÜCKES**
METHOD FOR MEASURING THE SPATIAL POSITION AND/OR OPENING OF A WORK PIECE
PROCEDE DE MESURE DE LA POSITION SPATIALE ET/OU DE LA PERFORATION D'UNE PIECE

(30) Priorität: 16.07.2001 DE 10133840
(43) Veröffentlichungstag der Anmeldung: 14.04.2004
(73) Patentinhaber: Werth Messtechnik GmbH, 35394 Giessen (DE)
(72) Erfinder: CHRISTOPH, Ralf, 35394 Griessen (DE); ANDRÄS, Matthias, 61197 Florstadt (DE)
(74) Vertreter: Stoffregen, Hans-Herbert
(86) Internationale Anmeldenummer: PCT/EP2002/007471
(87) Internationale Veröffentlichungsnummer: WO 2003/008901

(56) Entgegenhaltungen:
- EP-A- 0 676 634
- DE-A- 19 805 892
- DE-U- 9 401 449

## Beschreibung

Die Erfindung bezieht sich auf ein Verfahren zur Messung räumlicher Lage und/oder Abmessung einer Durchbrechung, wie der Bohrung eines Werkstückes, im Durchlichtverfahren unter Verwendung zumindest eines optischen Sensors.

Aus der DE 196 11 613 A1 ist ein Verfahren zum Messen von Bohrungen an Kraftstoffeinspritzventilen für Brennkraftmaschinen bekannt, bei der Auslaufkanten der Bohrungen nacheinander mit z. B. einer CCD-Kamera gemessen werden. Hierzu wird das Kraftstoffventil in eine Aufnahmevorrichtung eingespannt und mittels der Aufnahmevorrichtung vor dem Messvorgang in einer geometrisch festgelegten Position justiert.

Um schwer zugängliche Bohrungen eines Werkstückes optoelektronisch zu vermessen, wird nach der DE 100 09 946 A1 ein Spiegel in Nachbarschaft der Bohrung innerhalb des Werkstückes plaziert und auf die optische Achse der optoelektronischen Erfassungseinrichtung ausgerichtet, wobei die Lichtquelle selbst außerhalb des Werkstückes angeordnet ist.

Aus dem Gebrauchsmuster DE 9401449 U1 ist die Vermessung der Mündungsöffnung einer Flasche mittels Durchlicht bekannt, wobei mehrere Sensoren das aus der Flaschenmündung austretende Licht in verschiedenen Ebenen aufnehmen und daraus die Abweichung der Flaschenmündung vom Solldurchmesser bestimmen.

Der vorliegenden Erfindung liegt das Problem zu Grunde, ein Verfahren der eingangs genannten Art so weiterzubilden, dass mit konstruktiv einfachen Maßnahmen Durch brechungen wie Bohrungen mit hoher Präzision vermessen werden können.

Zur Lösung des Problems schlägt die Erfindung im Wesentlichen vor, dass zumindest zwei parallel verlaufende, nahezu kreisförmige Schnitte zwischen einem aus der Durchbrechung austretendem Lichtkegel und zumindest zwei Arbeitsebenen von optischen Sensoren gemessen werden, und aus durch die Mittelpunkte der nahezu kreisförmigen Schnitte verlaufender Geraden die Achsrichtung der Durchbrechung berechnet wird.

Mittelpunkt kann dabei auch derjenige eines Ausgleichskreises der gemessenen Fläche, dessen Flächenschwerpunkt oder sonstiger mathematischer an die gemessene Fläche angepasster geometrischer Größen wie Quadrate sein.

Mit anderen Worten wird vorgeschlagen, dass mit zumindest zwei Sensoren, die durch physikalisch einen optischen Sensor mit CNC verstellbarem Arbeitsabstand realisiert werden können, verschiedene Schnittebenen des Lichtkegels gleichzeitig gemessen und zur Auswertung gebracht werden. Dabei werden bevorzugterweise Werkstück bzw. Durchbrechung und optische Sensoren derart zueinander ausgerichtet, dass die Schnitte einen Kreis bilden, so dass eine deren Mittelpunkte durchsetzende Gerade die Mittelachse der Durchbrechung ergibt.

Dabei kann die Durchbrechung wie Bohrung mit dem Werkstück auf einem Koordinatenmessgerät durch Drehachsen und/oder Schwenkachsen positioniert werden. Ergänzend oder alternativ können die Sensoren gemeinsam in einer Dreh-Schwenkeinheit angeordnet sein, um auf einfache Weise eine Ausrichtung von Durchbrechung und Sensoren zu ermöglichen.

Als Sensoren, kommen insbesondere Bildverarbeitungssensoren wie CCD-Sensoren bzw. -Kameras mit einer Auswerteinrichtung in Frage. Dabei können die optischen Achsen der Sensoren mittels eines Strahlungsteilers auf einen gemeinsamen Strahlengang ausgerichtet werden,

Zur Querschnitts- bzw. Durchmesserbestimmung der Durchbrechung ist insbesondere vorgesehen, dass ein Arbeitsabstand bzw. Arbeitsebene eines Sensors in von Auslaufkanten der Durchbrechung aufgespannter Ebene verläuft.

Auch kann der Querschnitt der Durchbrechung bzw. dessen Durchmessers aus im Abstand zu den Austrittskanten verlaufenden Schnitten zwischen Lichtkegel und Arbeitsebenen unter Berücksichtigung des Abstands der Sensoren zu dem Werkstück ermittelt werden. Hierzu kann ein Abstandssensor benutzt werden.

Insbesondere wird jedoch eine Messung mittels eines opto-taktilen Tasters durchgeführt, dessen mit der Durchbrechung bzw. deren Begrenzung wechselwirkenden Tastelements optisch erfasst wird, wie dies aus der EP 0988505 bekannt ist, auf deren Offenbarung ausdrücklich verwiesen wird. Dabei ist der opto-taktile Taster für die weiteren die Schnitte ermittelnden optischen Sensoren durch Positionierung außerhalb deren Schärfenebenen unsichtbar und wird durch einen weiteren optischen Sensor mit zugeordneter Schärfenebene gemessen.

Für das Durchlicht selbst wird eine diffuse Lichtquelle bzw. diffuses Licht verwendet bzw. eine Lichtquelle, deren Erstreckung grösser als Querschnitt der Durchbrechung auf sensor-abgewandter Fläche ist.

Weitere Einzelheiten, Vorteile und Merkmale der Erfindung ergeben sich nicht nur aus den Ansprüchen, den diesen zu entnehmenden Merkmalen, -für sich und/oder in Kombination- sondern auch aus der nachfolgenden Beschreibung von der Zeichnung zu entnehmenden Ausführungsbeispielen.

Es zeigen:
- Fig. 1: eine Prinzipdarstellung einer Anordnung zur Bestimmung räumlicher Lage und/oder Abmessung einer Bohrung und
- Fig. 2: die Anordnung gemäß Figur 1 mit in Z-Richtung verstelltem Messkopf.

In den Figuren ist rein prinzipiell eine Messanordnung insbesondere eines Koordinatenmessgerätes dargestellt, um Abmessungen bzw. Lage von als Bohrung bezeichnete Durchbrechung 10 eines Werkstückes 12 zu messen. Dabei gelangt das Durchlichtverfahren zur Anwendung, d. h., dass auf der zu einer Lichtquelle 14 gegenüberliegenden Seite des Werkstücks 12 ein Messkopf 16 der Messanordnung verstellbar angeordnet ist, um die Bohrung 10 zu messen.

Der Messkopf 16, der als integrale Einheit mittels einer nicht dargestellten Dreh-Schwenkeinheit auf das Werkstück 12 bzw, die Bohrung 10 ausrichtbar ist, weist im Ausführungsbeispiel optoelektronische Erfassungseinrichtungen 18, 20, 22 wie CCD-Sensoren auf, die mit nicht dargestellten Auswerteeinrichtungen verbunden sind.

Das Werkstück 12 kann auf einem Messtisch eines Koordinatenmessgerätes angeordnet werden und z. B. über Dreh-/Schwenkachsen auf den Messkopf 16 ausgerichtet werden, der seinerseits in X-, Y- und Z- Richtung verstellbar ist, unabhängig von der Verstellmöglichkeit mit der Dreh-/Schwenkeinheit

Im Ausführungsbeispiel handelt es sich bei den Sensoren 20, 22 um optische Bildverarbeitungssensoren, deren Arbeitsabstände und somit Arbeitsebenen bzw. Objektebenen 30, 32 voneinander abweichen, also einen voneinander abweichenden Abstand zum Messkopf 16 zeigen, wie die Prinzipdarstellung verdeutlicht.

Das die Bohrung 10 durchsetzende Licht gelangt über Strahlungsteiler 24, 26,28 zu den Sensoren 18, 20, 22.

Des Weiteren ist ein opto-taktiler Sensor mit einem Tastelement 34 vorgesehen, der in Arbeitsebene 36 des optischen Sensors 18 angeordnet ist.

Um die Achsrichtung der Bohrung 10 zu ermitteln, wird die Bohrung 10 von der Lichtquelle 14 mit Licht beaufschlagt. Bei der Lichtquelle 14 handelt es sich um eine solche, die diffuses Licht abstrahlt oder deren Erstreckung grösser als lichte Weite der Bohrung 10 ist. Die Achsrichtung wird dadurch bestimmt, dass die Schnitte des die Bohrung 10 verlassenden Lichtkegels mit den Arbeits- bzw. Objektebenen 30, 32 der Sensoren 20, 22 gemessen wird. Bei ordnungsgemäßer Ausrichtung von Werkstück 12 zu dem Messkopf 16 handelt es sich hierbei um Kreisschnitte. Durch Ermittlung deren Mittelpunkte bzw. Durchstoßpunkte der beiden Kreise wird sodann die Achsrichtung der Bohrung 10 bestimmt.

Ferner kann die Geometrie bzw. der Durchmesser der Bohrung 10 im Bereich der Aussenfläche 38 des Werkstückes 12, also im Bereich der Auslasskanten der Bohrung 10 unmittelbar durch den Bildbearbeitungssensor 20 durch Abbildung der Bohrung gemessen werden.

Ergänzend kann ein opto-taktiles Messen der Bohrung 10 erfolgen, indem das Tastelement 34 in Kontakt mit der Wandung der Bohrung 10 gebracht wird. Das Tastelement 34 ist dabei ein Abschnitt wie Ende eines Fasertasters 40, der mit dem Messkopf 16 verbunden ist. Im Falle der Berührung der Wandung der Bohrung 10 erfolgt eine Auslenkung des Tastelementes 34, die zur Bestimmung eines Messpunktes durch den optischen Sensor 18 erfasst wird. Insoweit wird jedoch auf die Offenbarung der Europäischen Patentschrift 0 988 505 verwiesen.

Werden die Bildverarbeitungssensoren 20, 22 benutzt, liegt der opto-taktile Sensor 34, der auch als Antast-Formelement bzw. Fasertaster zu bezeichnen ist, im Unschärfebereich und ist somit nicht sichtbar.

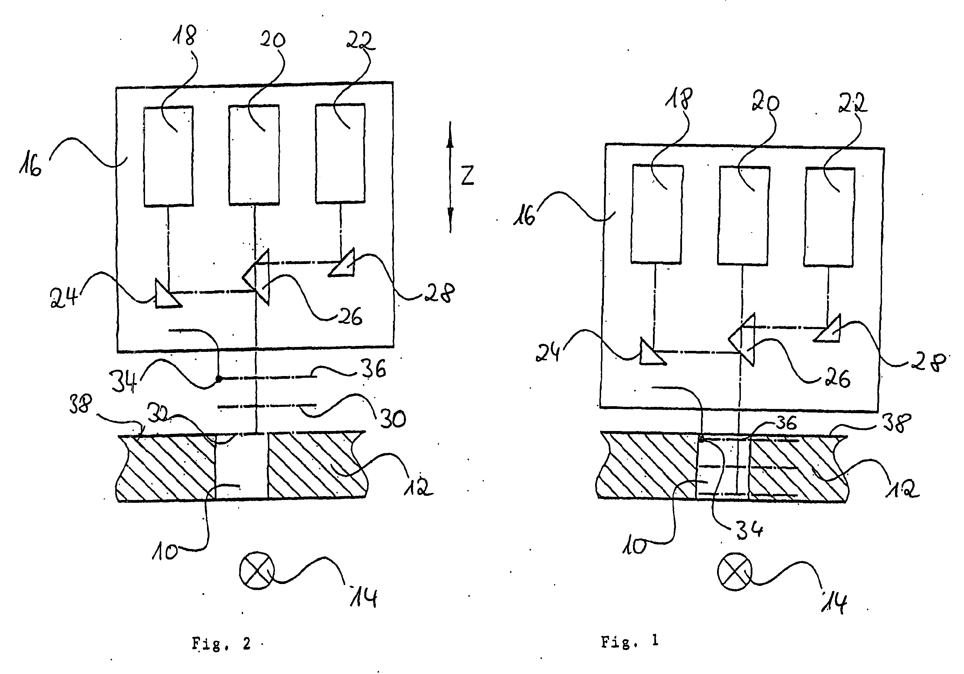

Soll mit dem Tastelement 34 gemessen werden, so wird der Messkopf 16 in Z-Richtung verstellt, damit das Tastelement 34 im Eingriff mit der Bohrung 10 gelangen kann. Dies _ ergibt sich auch aus einem Vergleich der Fig. 1 und 2.

Die Dimensionierung der Austrittsöffnung der Bohrung 10 kann auch dadurch bestimmt werden, wenn keine der Arbeitsebenen 30, 32 der Sensoren 20, 22 in der von der Austrittskante der Bohrung 10 aufgespannten Ebene verläuft. In diesem Fall kann aus dem Verhältnis der Schnitte zwischen dem Lichtkegel und den Arbeitsebenen 30, 32 und dem Abstand des Messkopfs 16 zur Oberfläche 38 des Messobjektes 12 die Dimensionierung der Bohrung 10 berechnet werden. Um den Abstand zu bestimmen, kann ein zusätzlicher nicht dargestellte Abstandssensor zum Einsatz gelangen.

## Patentansprüche

1. Verfahren zur Messung räumlicher Lage und/oder Abmessung einer Durchbrechung, wie der Bohrung eines Werkstückes, im Durchlichtverfahren unter Verwendung zumindest eines optischen Sensors,
**dadurch gekennzeichnet,**
**dass** zumindest zwei parallel verlaufende, nahezu kreisförmige Schnitte zwischen einem aus der Durchbrechung austretendem Lichtkegel und zumindest zwei Arbeitsebenen von optischen Sensoren gemessen werden, und aus durch die Mittelpunkte der nahezu kreisförmigen Schnitte verlaufender Geraden die Achsrichtung der Durchbrechung berechnet wird.

2. Verfahren nach Anspruch 1,
**dadurch gekennzeichnet,**
**dass** eine Arbeitsebene eines Sensors in einer von der Durchbrechung durchsetzten sensorzugewandten Fläche verläuft.

3. Verfahren nach Anspruch 1 oder 2,
**dadurch gekennzeichnet,**
**dass** für das Durchlicht eine diffuse Lichtquelle bzw. diffuses Licht verwendet wird.

4. Verfahren nach zumindest einem der vorhergehenden Ansprüche,
**dadurch gekennzeichnet,**
**dass** eine Lichtquelle verwendet wird, deren Erstreckung größer als die der Durchbrechung auf sensorabgewandter Fläche des Werkstückes ist.

5. Verfahren nach zumindest einem der vorhergehenden Ansprüche,
**dadurch gekennzeichnet,**
**dass** die parallel zueinander verlaufenden Schnitte zwischen Lichtkegel und den Arbeitsebenen gleichzeitig gemessen werden.

6. Verfahren nach zumindest einem der vorhergehenden Ansprüche,
**dadurch gekennzeichnet,**
**dass** das Objekt über Strahlungsteiler von Sensoren mit voneinander abweichenden Arbeitsabständen erfasst wird.

7. Verfahren nach zumindest einem der vorhergehenden Ansprüche,
**dadurch gekennzeichnet,**
**dass** zur Messung von zwei Schnitten zwischen dem Lichtkegel und den Arbeitsebenen ein einziger Sensor mit verstellbarem Arbeitsabstand verwendet wird.

8. Verfahren nach zumindest einem der vorhergehenden Ansprüche,
**dadurch gekennzeichnet,**
**dass** ein Sensor mit CNC-verstellbarem Arbeitsabstand verwendet wird.

9. Verfahren nach zumindest einem der vorhergehenden Ansprüche,
**dadurch gekennzeichnet,**
**dass** als Sensoren Bildverarbeitungssensoren zur Messung der Schnitte verwendet werden.

10. Verfahren nach Anspruch 9,
**dadurch gekennzeichnet,**
**dass** neben dem bzw. den Bildverarbeitungssensoren ein taktiler bzw. opto-taktiler Sensor zur Messung von Umfangsgeometric bzw. Durchmesser der Durchbrechung verwendet wird.

11. Verfahren nach Anspruch 10,
**dadurch gekennzeichnet,**
**dass** ein mit einer Begrenzung der Durchbrechung in Berührung gelangendes Tastelement des taktilen bzw. opto-taktilen Sensors außerhalb der Arbeitsabstände der Bildverarbeitungssensoren verläuft.

12. Verfahren nach zumindest einem der vorhergehenden Ansprüche,
**dadurch gekennzeichnet,**
**dass** mittels eines Abstandssensors der Abstand zwischen einem die Sensoren aufnehmendem Messkopf und der sensorzugewandten, von der Durchbrechung durchsetzten Fläche des Werkstücks bestimmt wird.

13. Verfahren nach zumindest einem der vorhergehenden Ansprüche,
**dadurch gekennzeichnet,**
**dass** Durchbrechung und Sensoren derart aufeinander ausgerichtet werden, dass der Schnitt ein Kreis ist.

14. Verfahren nach zumindest einem der vorhergehenden Ansprüche,
**dadurch gekennzeichnet,**
**dass** ein Werkstück auf einem Koordinatenmessgerät durch Drehachsen und/oder Schwenkachsen positioniert wird.

15. Verfahren nach zumindest einem der vorhergehenden Ansprüche,
**dadurch gekennzeichnet,**
**dass** ein die Sensoren aufnehmender Messkopf mittels einer Dreh-Schwenkeinheit verstellt wird.

16. Verfahren nach zumindest einem der Ansprüche 10 oder 11,
**dadurch gekennzeichnet,**
**dass** der taktile bzw. opto-taktile Sensor in einen Messkopf integriert wird.

## Claims

1. Process for the measurement of spatial position and/or dimension of an opening, such as a bore of a work piece, in the transmitted light process by using at least one optical sensor,
**characterized in**
**that** at least two parallel, nearly circular sections are measured by optical sensors between a light cone emerging the opening and at least two working planes and that the axial direction of the opening is calculated by means of straight lines extending between the centers of the nearly circular sections.

2. Process according to claim 1,
**characterized in**
**that** a working plane of a sensor runs in a plane facing the sensor and containing the opening.

3. Process according to claim 1 or 2,
**characterized in**
**that** a diffused light source or diffused light is used for the transmitted light.

4. Process according to at least one of the proceeding claims,
**characterized in**
**that** a light source is used whose extension is larger than that of the opening on the surface of the work piece that is facing away from the sensor

5. Process according to at least one of the proceeding claims,
**characterized in**
**that** the sections running parallel to each other between light cone and the working planes are measured simultaneously.

6. Process according to at least one of the proceeding claims,
**characterized in**
**that** the object is detected via beam splitter by sensors with working distances deviating from one another.

7. Process according to at least one of the proceeding claims,
**characterized in**
**that** a single sensor with an adjustable working distance is used for measurement of two sections between the light cone and the working planes.

8. Process according to at least one of the proceeding claims,
**characterized in**
**that** a sensor with a CNC adjustable working distance is used.

9. Process according to at least one of the proceeding claims,
**characterized in**
**that** image processing sensors are used as sensors to measure the sections.

10. Process according to claim 9,
**characterized in**
**that** in addition to the image processing sensor(s), a tactile or opto-tactile sensor is used for the measurement of the circumference geometry or the diameter of the opening.

11. Process according to claim 10,
**characterized in**
**that** a scanning element, touching a limitation of the opening, of the tactile or opto tactile sensor runs outside the working distances of the image processing sensors.

12. Process according to at least one of the proceeding claims,
**characterized in**
**that** the distance between a measuring head receiving the sensors and the surface of the work piece facing the sensor and being provided with the opening is measured via a distance sensor.

13. Process according to at least one of the proceeding claims,
**characterized in**
**that** openings and sensors are aligned in such a way relative to each other that the section is a circle.

14. Process according to at least one of the proceeding claims,
**characterized in**
**that** a work piece is positioned on a coordination measurement device through rotating and/or pivotal axes.

15. Process according to at least one of the proceeding claims,
**characterized in**
**that** a measuring head receiving the sensors is adjustable with a rotating pivotal unit.

16. Process according to at least one of claims 10 or 11,
**characterized in**
**that** the tactile or opto-tactile sensor is integrated in a measuring head.

## Revendications

1. Procédé de mesure de la position spatiale et/ou d'une perforation, telle que le perçage d'une pièce, par un procédé de transmission de lumière utilisant au moins un capteur optique,
**caractérisé en ce**
**qu'**au moins deux sections parallèles pratiquement circulaires sont mesurées par des capteurs optiques entre un cône lumineux sortant de la perforation et au moins deux plans de travail, et que l'orientation axiale de la perforation est déterminée à partir de droites passant par les points centraux des sections pratiquement circulaires.

2. Procédé selon la revendication 1,
**caractérisé en ce**
**qu'**un plan de travail d'un capteur s'étend sur une surface faisant face au capteur et traversée par la perforation.

3. Procédé selon la revendication 1 ou 2,
**caractérisé en ce**
**qu'**une source de lumière diffuse ou une lumière diffuse est utilisée pour la transmission de lumière.

4. Procédé selon au moins une des revendications précédentes,
**caractérisé en ce**
**qu'**est utilisée une source de lumière dont l'étendue est supérieure à celle de la perforation sur la surface de la pièce faisant face au capteur.

5. Procédé selon au moins une des revendications précédentes,
**caractérisé en ce**
**que** les sections s'étendant parallèlement l'une par à l'autre sont mesurées simultanément entre le cône lumineux et les plans de travail.

6. Procédé selon au moins une des revendications précédentes,
**caractérisé en ce**
**que** l'objet est capté via un diviseur de rayonnement par les capteurs avec des distances de travail différentes les unes des autres.

7. Procédé selon au moins une des revendications précédentes,
**caractérisé en ce**
**qu'**un seul capteur avec distance de travail réglable est utilisé pour mesurer deux sections entre le cône lumineux et les plans de travail.

8. Procédé selon au moins une des revendications précédentes,
**caractérisé en ce**
**qu'**est utilisé un capteur avec distance de travail réglable par commande numérique.

9. Procédé selon au moins une des revendications précédentes,
**caractérisé en ce**
**que** des capteurs de traitement d'image sont utilisés en tant que capteurs pour la mesure des sections.

10. Procédé selon la revendication 9,
**caractérisé en ce**
**qu'**outre le ou les capteur(s) de traitement d'image est utilisé un capteur tactile ou un capteur optique tactile pour mesurer la géométrie circonférentielle ou le diamètre de la perforation.

11. Procédé selon la revendication 10,
**caractérisé en ce**
**qu'**un élément capteur du capteur tactile ou du capteur optique tactile entrant en contact avec l'extrémité de la perforation s'étend en dehors des distances de travail des capteurs de traitement d'image.

12. Procédé selon au moins une des revendications précédentes,
**caractérisé en ce**
**que** la distance entre une tête de mesure logeant les capteurs et la surface de la pièce faisant face au capteur et traversée par la perforation est déterminée à l'aide d'un capteur de distance.

13. Procédé selon au moins une des revendications précédentes,
**caractérisé en ce**
**que** la perforation et les capteurs sont orientés les uns par rapport aux autres de telle manière que la section forme un cercle.

14. Procédé selon au moins une des revendications précédentes,
**caractérisé en ce**
**qu'**une pièce est positionnée sur un mesureur à coordonnées par l'intermédiaire d'axes de rotation et/ou de pivotement.

15. Procédé selon au moins une des revendications précédentes,
**caractérisé en ce**
**qu'**une tête de mesure logeant les capteurs peut être ajustée à l'aide d'une unité rotative pivotante.

16. Procédé selon au moins une des revendications 10 ou 11,
**caractérisé en ce**
**que** le capteur tactile ou optique tactile est intégré dans une tête de mesure.
